(19) **Europäisches Patentamt / European Patent Office / Office européen des brevets**

(11) **EP 3 122 548 B1**

(12) **FASCICULE DE BREVET EUROPEEN**

(45) Date de publication et mention
de la délivrance du brevet:
**11.07.2018 Bulletin 2018/28**

(21) Numéro de dépôt: **15713971.8**

(22) Date de dépôt: **27.02.2015**

(51) Int Cl.:
**B29D 30/06** *(2006.01)*  **B29C 33/00** *(2006.01)*

(86) Numéro de dépôt international:
**PCT/FR2015/050470**

(87) Numéro de publication internationale:
**WO 2015/145004 (01.10.2015 Gazette 2015/39)**

(54) **MODÈLE DE PRÉDICTION DE DÉMOULABILITÉ**

PRÄDIKTIVES MODEL FÜR ENTFORMUNGSVERHALTEN

MODEL FOR DEMOULDING PREDICTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.03.2014 FR 1452449**

(43) Date de publication de la demande:
**01.02.2017 Bulletin 2017/05**

(73) Titulaire: **Compagnie Générale des
Etablissements Michelin
63000 Clermont-Ferrand (FR)**

(72) Inventeur: **VILLENEUVE, Bernard
F-63040 Clermont-Ferrand Cedex 9 (FR)**

(74) Mandataire: **Demaure, Pierre-Yves
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
**JP-A- 2012 006 287    JP-A- 2012 096 462**

**Description**

La présente invention se rapporte à un procédé d'évaluation de l'effort de démoulage d'un pneu d'un moule donné et plus particulièrement une méthode de prédiction de la démoulabilité de nouvelles sculptures combiné à des nouveaux matériaux.

Les nouvelles gammes de pneumatiques doivent répondre à un cahier des charges fonctionnel basé sur des performances telles que l'adhérence, la résistance au roulement, le bruit ... Mais, ces nouvelles gammes doivent aussi avoir un impact le plus faible possible sur le coût de fabrication des pneus.

Le coût de fabrication comprend à la fois les matières premières utilisées, le coût façon pour réaliser les enveloppes crues qui constituerons le pneu et le coût façon du poste cuisson (temps nécessaire à la vulcanisation de l'enveloppe crue et temps nécessaire à l'ouverture du moule de cuisson), et plus le temps nécessaire à l'ouverture de la presse dans laquelle est placée le moule, est long, moins il reste de temps pour cuire les enveloppes crues. Dans les cas extrêmes, il est impossible de démouler l'enveloppe après cuisson.

Les nouvelles sculptures des pneus sont de plus en plus complexes ce qui augmente le temps de démoulage. Pouvoir anticiper la démoulabilité de ces nouvelles sculptures évite de mettre sur le marché des solutions trop consommatrices de temps post cuisson et donc trop onéreuses. Ainsi, il existe un besoin d'avoir un outil prédictif qui éviterait de réaliser des moules de cuissons dont l'utilisation en usine ne serait pas, d'un point de vue industriel, acceptable.

Il est possible de réaliser un moule de cuisson comportant la nouvelle sculpture et de mesurer les efforts nécessaires pour contrecarrer l'adhérence générée entre ce moule de cuisson et l'enveloppe crue lors de la phase de cuisson. Pour pouvoir appréhender la démoulabilité de nouvelles sculptures, il est possible de réaliser des portions de moule avec les différentes sculptures à évaluer et de mesurer, grâce à un axe dynamométrique monté sur chaque portion différente, les efforts nécessaires pour vaincre l'adhérence générée lors de la cuisson pour chaque solution. Cependant, l'inconvénient majeur de cette solution est qu'il faut réaliser l'équivalent d'un moule complet ce qui représente un coût assez élevé pour une méthode exploratoire.

Le savoir faire des opérationnels peut être mis à contribution, mais ceci a pour conséquences que des contraintes subjectives (basées sur le ressenti et non pas sur l'expérimental) risquent de pénaliser fortement la définition de nouvelles sculptures et donc avoir un effet négatif sur les performances recherchées.

Le document JP 2012096462 - A décrit un procédé pour mesurer l'effort de glissement d'un modèle de secteur de moule pour pneumatique. Dans ce document il n'y a aucune référence au problème de démoulage d'un pneu vulcanisé et à l'évaluation des efforts nécessaires pour contrecarrer l'adhérence générée entre le moule de cuisson et le pneumatique vulcanisé.

On connait du brevet JP 2012 006 287 une méthode et un moyen permettant, à partir d'une portion d'éléments de sculpture, d'appréhender les efforts nécessaires à la démoulabilité d'éléments de sculpture plus conséquents tout en limitant le coût. Ce brevet décrit une méthode utilisant une « éprouvette » représentative d'une partie de la sculpture choisie dans la zone la plus contraignante du moule complet et à mesurer les efforts nécessaires pour vaincre l'adhérence générée sur l'éprouvette pour ensuite la transposer à des pièces de tailles plus grandes.

Cependant, l'adhérence de l'enveloppe crue sur le moule qui apparait lors de la phase de cuisson est tributaire d'un nombre important de paramètres qui sont difficiles à appréhender dans leurs globalités. Si l'aspect géométrique de la sculpture : dimensionnel et géométrie intrusive, est partiellement pris en compte dans cet état de la technique, l'impact des matériaux utilisés (enveloppe crue et moule) n'est pas pris en compte. Ainsi les interactions physico-chimiques qui se créent durant la phase de cuisson, la nature des matériaux utilisés, leur rigidité et le frottement de l'enveloppe sur le moule lors du démoulage ne sont pas mesurés.

La composition des matériaux des pneus évolue rapidement et la nature des constituants peut avoir un effet non négligeable sur les efforts de démoulage. Ainsi, avec une même sculpture, le simple fait de changer les matériaux des pneus peut avoir un impact important sur la démoulabilité.

L'objet de la présente invention est de proposer un procédé comme défini dans la revendication 1, qui permette de prendre en compte le matériau dans l'évaluation de la démoulabilité d'un pneu du moule.

Le procédé d'évaluation d'un effort de démoulage d'un pneu d'un moule selon l'invention consiste à mesurer l'effort de démoulage d'un matériau d'un échantillon de moule et d'une éprouvette témoin, ledit procédé comporte:

- une étape de choix d'un échantillon de moule,
- une étape de choix d'un matériau de référence,
- une étape de mesure de l'effort $F_0$ de démoulage de l'échantillon de moule par le matériau de référence,
- une étape de détermination de l'effort $M_0$ de démoulage du matériau de référence de l'éprouvette témoin,
- une étape de sélection d'un matériau à mesurer,
- une étape de détermination de l'effort M de démoulage du matériau de l'éprouvette témoin,
- une étape de calcul du rapport des efforts $M_0$ de démoulage du matériau de référence et M du matériau de l'éprouvette témoin pour définir un coefficient C d'impact matériau,

- une étape de calcul de l'effort F de démoulage du matériau à mesurer tel que $F = C \times F_0$.

L'échantillon de moule est un moule témoin dont on connaît les caractéristiques et l'effort maxi de déboitage pour un matériau donné qui sera le matériau de référence. On fait le rapprochement entre une sculpture existante et la nouvelle sculpture avec le matériau de référence, et on compare les deux solutions : le témoin et la nouvelle sculpture.

Pour limiter la disparité des résultats, le choix des moules témoin devra être représentatif du l'utilisation du moule comportant la nouvelle sculpture : presse de cuisson similaire, même catégorie d'enveloppe (véhicule de tourisme, poids lourds, routier, hiver, ...).

Selon une caractéristique complémentaire, il comprend une étape de mesure d'un deuxième échantillon de moule tel que l'effort $M_1$ de démoulage de ce deuxième échantillon est supérieur à l'effort $M_0$. Ceci constitue un plan d'expérience qui permet d'appréhender les efforts de démoulage des différents types de moules et donc de sculptures.

Avantageusement, l'effort $M_0$ de démoulage constitue une borne inférieure et l'effort $M_1$ constitue une borne supérieure. Chaque borne est constituée par un échantillon d'un moule témoin haut pour lequel l'effort de démoulage est important et qui matérialise la limite à ne pas dépasser et un échantillon d'un moule témoin bas dont les efforts sont acceptables en usine d'un point de vue industriel.

Selon une autre caractéristique, l'évaluation de l'effort de démoulage d'un deuxième matériau est limitée aux étapes suivantes :

- la détermination de l'effort M' de démoulage du deuxième matériau de l'éprouvette témoin
- le calcul du rapport des efforts $M_0$ de démoulage du deuxième matériau témoin et M' du deuxième matériau de l'éprouvette témoin pour définir un coefficient C' d'impact matériau,
- le calcul de l'effort F' de démoulage du deuxième matériau tel que $F' = C' \times F_0$.

Ainsi la mesure des autres matériaux se fera uniquement en mesurant l'effort de démoulage de l'éprouvette témoin par chacun des autres matériaux. Cette éprouvette témoin est assez simple puisqu'on ne mesure que l'effort de démoulabilité du matériau sans tenir compte de la sculpture du pneu. Le coût de cette mesure est donc faible.

L'invention a également pour objet, un dispositif comme défini dans la revendication 6 pour la sélection d'un couple matériau / moule qui comprend un échantillon de moule, une éprouvette témoin, un dispositif de mesure d'effort et un moyen de calcul, et qu'il utilise le procédé avec les caractéristiques précédentes. De préférence, l'échantillon de moule est choisi dans une zone du moule où l'effort de démoulage est le plus important. Ceci permet de mesurer l'effort à l'endroit où c'est le plus défavorable industriellement. L'éprouvette témoin est assez simple à réaliser, elle est de forme sensiblement rectangulaire, plane et présente simplement un évidement dans lequel on mesurera l'effort de démoulage du matériau.

Un autre objet de l'invention concerne un programme d'ordinateur comme défini dans la revendication 7 pour la sélection d'un couple matériau / moule qui comprend les instructions suivantes :

- une étape de choix d'un échantillon de moule,
- une étape de choix d'un matériau de référence,
- une étape de mesure de l'effort $F_0$ de démoulage de l'échantillon de moule par le matériau de référence,
- une étape de détermination de l'effort $M_0$ de démoulage du matériau de référence de l'éprouvette témoin,
- une étape de sélection d'un matériau à mesurer,
- une étape de détermination de l'effort M de démoulage du matériau de l'éprouvette témoin
- une étape de calcul du rapport des efforts $M_0$ de démoulage du matériau de référence et M du matériau de l'éprouvette témoin pour définir un coefficient C d'impact matériau,
- une étape de calcul de l'effort F de démoulage du matériau tel que $F = C \times F_0$.

Un autre objet de l'invention (tel que défini dans la revendication 8) concerne également l'utilisation du procédé pour la sélection d'un couple matériau / moule tel que l'effort F de démoulage du matériau est inférieur à un effort de démoulage prédéterminé.

D'autres avantages pourront encore apparaître à l'homme du métier à la lecture des exemples ci-dessous, illustrés par les figures annexées, donnés à titre illustratif.

- La figure 1 représente un organigramme des étapes du procédé d'évaluation de l'effort de démoulage d'un pneu,
- La figure 2 représente un dispositif de sélection selon l'invention.

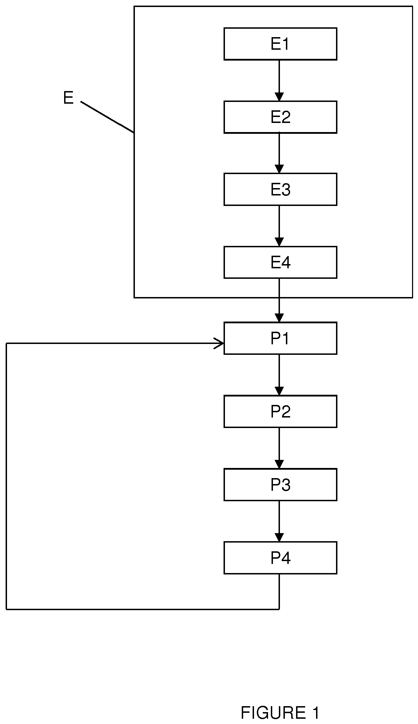

La figure 1 représente l'organigramme des étapes du procédé d'évaluation de l'effort de démoulage d'un pneu d'un moule.

Le procédé comporte une étape E de détermination pour un matériau de référence 6 des efforts de démoulage

F$_0$ d'un moule et M$_0$ d'une éprouvette témoin 3. Cette étape E comprend une sous étape E1 de définition d'un échantillon de moule 2 à partir d'un moule de cuisson d'un pneumatique, une sous étape E2 de choix d'un matériau de référence 6, une sous étape E3 de mesure de l'effort F$_0$ de démoulage de l'échantillon de moule 2 par le matériau de référence 6 et une sous étape E4 de détermination de l'effort M$_0$ de démoulage du matériau de référence 6 de l'éprouvette témoin 3.

Cette étape E nécessite deux mesures, une pour l'échantillon de moule 2 et une pour l'éprouvette témoin 3.

Le procédé comprend une deuxième étape P1 de définition du matériau à mesurer 7, suivie d'une étape P2 de détermination de l'effort M de démoulage du matériau 7 de l'éprouvette témoin 3.

L'étape suivante P3 consiste à calculer le coefficient d'impact matériau C du matériau à mesurer 7, ce coefficient C est le rapport des efforts M$_0$ de démoulage du matériau de référence 6 et M du matériau 7 de l'éprouvette témoin 3:

$$C = M / M_0.$$

Ensuite, l'étape P4 est le calcul de l'effort F de démoulage de l'échantillon de moule 2 du matériau à mesurer 7 tel que F = C x F$_0$.

Pour chaque nouveau matériau à mesurer 7, il suffira de définir son coefficient d'impact matériau en réitérant le procédé à partir de l'étape P1. On comprend ainsi que la détermination de l'effort de démoulage de ce matériau dans le moule ne nécessitera qu'une seule mesure, celle de l'effort de démoulage de l'éprouvette témoin, ce qui réduit considérablement les coûts.

Afin de faciliter le choix d'un type de sculpture, on peut réaliser une éprouvette des moules avec une limite haute et une limite basse pour chaque variante à évaluer d'un matériau. La limite haute correspond à un démoulage facile et la limite haute correspond à un démoulage difficile.

Le tableau suivant montre des exemples de valeurs d'effort de démoulage facile (témoin bas) et difficile (témoin haut).

|  | Témoin bas | Variante A | Variante B | Témoin haut |
|---|---|---|---|---|
| Efforts de démoulage éprouvette en daN | 374 | 452 | 472 | 570 |
| Coefficient de démoulabilité éprouvette | 1 | 1.2086 | 1.2620 | 1.5241 |
| Matériaux utilisés | X | Y | Y | Z |

Dans ce tableau les différentes variantes de moules ont été mesurés avec différents matériaux X, Y et Z. Le procédé permet à partir de ces mesures de définir les efforts de démoulage de différents matériaux sans nécessiter de nouvelles mesures avec les différentes variantes de moule.

En effet, la mesure de l'effort de démoulage d'une éprouvette témoin 3 qui est simple, sans sculptures et de forme plane est facile à réaliser. Cela permet de classer les différents matériaux les uns par rapport aux autres. Ainsi si on prend comme référence le matériau X on obtiendra par exemple le tableau T1 suivant :

| *Eprouvette analytique matériau* | Mélange X | Mélange Y | Mélange Z |
|---|---|---|---|
| Efforts de démoulage matériau | 318 | 340 | 404 |
| Coefficient impact matériau | 1 | 1.0692 | 1.2704 |

On voit ainsi que le matériau Y génère 7% d'efforts en plus et le matériau Z, 27%.

Par contre si on prend Y comme matériau de référence on obtient le tableau T2 suivant :

| *Eprouvette analytique matériau* | Mélange X | Mélange Y | Mélange Z |
|---|---|---|---|
| Efforts de démoulage matériau | 318 | 340 | 404 |
| Coefficient impact matériau | 0.9353 | 1 | 1.1882 |

On voit que le matériau Y génère 19% moins d'efforts que Z.

A partir de ces mesures il est possible d'extrapoler la démoulabilité des différentes variantes en utilisant des matériaux différents sans refaire une série de mesure qui associerai variante / mélange. On peut ainsi évaluer les variantes A et B avec les matériaux X ou Z alors que les mesures ont été faites avec le matériau Y, on obtient alors le tableau T3 suivant pour X:

|  | Témoin bas | Variante A | Variante B | Témoin haut |
|---|---|---|---|---|
| Coefficient de démoulabilité éprouvette<br>*Matériaux utilisés* | 1<br>X | 1.2086<br>Y | 1.2620<br>Y | 1.5241<br>Z |
| Matériaux à évaluer | X | X | X | Z |
| Coefficient impact matériau | 1 | 0.9353 | 0.9353 | 1 |
| Coefficient de démoulabilité moule | 1 | 1.1304 | 1.1803 | 1.5241 |

Et le tableau T4 suivant pour Z :

|  | Témoin bas | Variante A | Variante B | Témoin haut |
|---|---|---|---|---|
| Coefficient de démoulabilité éprouvette<br>*Matériaux utilisés* | 1<br>X | 1.2086<br>Y | 1.2620<br>Y | 1.5241<br>Z |
| Matériaux à évaluer | X | Z | Z | Z |
| Coefficient impact | 1 | 1.1882 | 1.1882 | 1 |
| matériau |  |  |  |  |
| Coefficient de démoulabilité moule | 1 | 1.4361 | 1.4996 | 1.5241 |

On voit ainsi que quand le matériau à évaluer est identique au matériau utilisé sur l'éprouvette, le coefficient impact matériau est à 1, et lorsque le matériau à évaluer est différent de celui utilisé pour l'éprouvette, le coefficient impact matériau est différent. Sur le tableau T3, on voit que le fait d'utiliser le mélange X sur les variantes A et B permet de diminuer les efforts (environ -7%) par rapport à Y. Par contre on constate qu'en utilisant le mélange Z sur les variantes A et B, les efforts résultants sont proches du témoin haut (qui est la limite à ne pas dépasser). On peut donc en conclure que soit il faut redéfinir la sculpture des différentes variantes soit il faut modifier la composition du mélange Z pour diminuer les efforts. Il est donc possible avec cette méthode de prédire la démoulabilité de nouvelles sculptures associés à des mélanges différents sans avoir à refaire une série de mesures d'efforts spécifiques pour chaque variante.

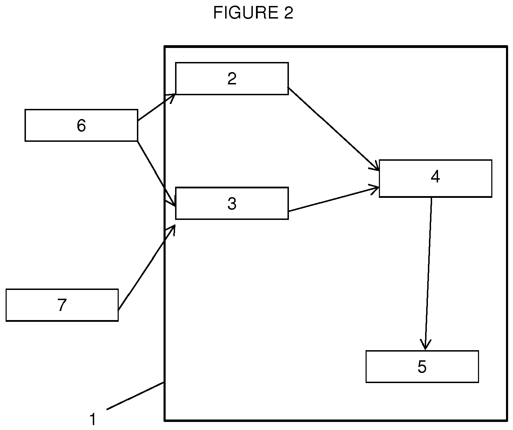

On va maintenant décrire le dispositif 1 illustré figure 2. Ce dispositif 1 comprend un échantillon de moule 2, une éprouvette témoin 3, un dispositif de mesure d'effort 4 et un moyen de calcul 5. Le dispositif sert à mesurer l'effort $F_0$ de démoulage d'un matériau de référence 6 placé dans l'échantillon de moule 2 et puis l'effort $M_0$ dans l'éprouvette témoin 3 grâce au dispositif de mesure 4. Ledit dispositif 1 sert ensuite à mesurer l'effort M de démoulage du matériau à mesurer 7 puis à calculer avec le moyen de calcul 5 le coefficient C d'impact matériau et l'effort de démoulage F du matériau 7 dans l'échantillon de moule 3.

## Revendications

1. Procédé d'évaluation d'un effort de démoulage d'un pneu d'un moule consistant à mesurer l'effort de démoulage d'un matériau (6) d'un échantillon de moule (2) et d'une éprouvette témoin (3), ledit procédé comportant:

   - une étape (E1) de choix d'un échantillon de moule (2),
   - une étape (E2) de choix d'un matériau de référence (6),
   - une étape (E3) de mesure de l'effort $F_0$ de démoulage de l'échantillon de moule (2) par le matériau de référence (6),
   - une étape (E4) de détermination de l'effort $M_0$ de démoulage du matériau de référence (6) de l'éprouvette témoin (3),
   - une étape (P1) de sélection d'un matériau à mesurer (7),
   - une étape (P2) de détermination de l'effort M de démoulage du matériau (7) de l'éprouvette témoin (3),
   - une étape (P3) de calcul du rapport des efforts $M_0$ de démoulage du matériau de référence (6) et M du matériau (7) de l'éprouvette témoin (3) pour définir un coefficient C d'impact matériau,
   - une étape (P4) de calcul de l'effort F de démoulage du matériau (7) tel que $F = C \times F_0$.

**2.** Procédé d'évaluation selon la revendication 1 **caractérisé en ce qu'**il comprend une étape (E3) de mesure d'un deuxième échantillon de moule tel que l'effort $M_1$ de démoulage de ce deuxième échantillon est supérieur à l'effort $M_0$.

**3.** Procédé d'évaluation selon la revendication précédente **caractérisé en ce que** l'effort $M_0$ de démoulage constitue une borne inférieure et l'effort $M_1$ constitue une borne supérieure.

**4.** Procédé d'évaluation selon une des revendications précédentes **caractérisé en ce que** l'évaluation de l'effort de démoulage M' d'un deuxième matériau est limité aux étapes suivantes :

- la détermination de l'effort M' de démoulage du deuxième matériau de l'éprouvette témoin (3),
- le calcul du rapport des efforts $M_0$ de démoulage du deuxième matériau de référence et M' du deuxième matériau de l'éprouvette témoin (3) pour définir un coefficient C' d'impact matériau,
- le calcul de l'effort F' de démoulage du deuxième matériau tel que $F' = C' \times F_0$.

**5.** Procédé d'évaluation selon une des revendications précédentes **caractérisé en ce que** l'échantillon de moule (2) est choisi dans une zone du moule où l'effort de démoulage est le plus important.

**6.** Dispositif (1) de sélection d'un couple matériau / moule **caractérisé en ce qu'**il comprend un échantillon de moule (2), une éprouvette témoin (3), un dispositif de mesure d'effort (4) et un moyen de calcul (5) et qu'il utilise le procédé selon une des revendications précédentes.

**7.** Programme d'ordinateur pour la sélection d'un couple matériau / moule **caractérisé en ce qu'**il comprend les instructions suivantes :

- une étape de choix d'un échantillon de moule (2),
- une étape de choix d'un matériau de référence (6),
- une étape de mesure de l'effort $F_0$ de démoulage de l'échantillon de moule (2) par le matériau de référence (6),
- une étape de détermination de l'effort $M_0$ de démoulage du matériau de référence (6) de l'éprouvette témoin (3),
- une étape de sélection d'un matériau à mesurer (7),
- une étape de détermination de l'effort M de démoulage du matériau (7) de l'éprouvette témoin (3),
- une étape de calcul du rapport des efforts $M_0$ de démoulage du matériau de référence (6) et M du matériau (7) de l'éprouvette témoin (2) pour définir un coefficient C d'impact matériau,
- une étape de calcul de l'effort F de démoulage du matériau (7) tel que $F = C \times F_0$.

**8.** Utilisation du procédé selon l'une quelconque des revendications 1 à 5 pour la sélection d'un couple matériau / moule satisfaisant la condition que l'effort F de démoulage du matériau est inférieur à un effort de démoulage prédéterminé.

**Patentansprüche**

**1.** Bewertungsverfahren einer Entformungskraft eines Reifens aus einer Form, das darin besteht, die Entformungskraft eines Materials (6) eines Formmusters (2) und eines Kontrollprüflings (3) zu messen, wobei das Verfahren aufweist:

- einen Schritt (E1) der Wahl eines Formmusters (2),
- einen Schritt (E2) der Wahl eines Bezugsmaterials (6),
- einen Schritt (E3) der Bemessung der Entformungskraft $F_0$ des Formmusters (2) durch das Bezugsmaterial (6),
- einen Schritt (E4) der Bestimmung der Entformungskraft $M_0$ des Bezugsmaterials (6) des Kontrollprüflings (3),
- einen Schritt (P1) der Auswahl eines zu messenden Materials (7),
- einen Schritt (P2) der Bestimmung der Entformungskraft M des Materials (7) des Kontrollprüflings (3),
- einen Schritt (P3) der Berechnung des Verhältnisses der Entformungskräfte $M_0$ des Bezugsmaterials (6) und M des Materials (7) des Kontrollprüflings (3), um einen Koeffizienten C des Materialeinflusses zu definieren,
- einen Schritt (P4) der Berechnung der Entformungskraft F des Materials (7) derart, dass gilt $F = C \times F_0$.

**2.** Bewertungsverfahren nach Anspruch 1, **dadurch gekennzeichnet, dass** es einen Schritt (E3) der Bemessung eines zweiten Formmusters enthält, derart, dass die Entformungskraft $M_1$ dieses zweiten Musters größer ist als die Kraft $M_0$.

3. Bewertungsverfahren nach dem vorhergehenden Anspruch, **dadurch gekennzeichnet, dass** die Entformungskraft $M_0$ eine Untergrenze und die Kraft $M_1$ eine Obergrenze bildet.

4. Bewertungsverfahren nach einem der vorhergehenden Ansprüche, **dadurch gekennzeichnet, dass** die Bewertung der Entformungskraft M' eines zweiten Materials auf die folgenden Schritte begrenzt ist:

   - die Bestimmung der Entformungskraft M' des zweiten Materials des Kontrollprüflings (3),
   - die Berechnung des Verhältnisses der Entformungskräfte $M_0$ des zweiten Bezugsmaterials und M' des zweiten Materials des Kontrollprüflings (3), um einen Koeffizienten C' des Materialeinflusses zu definieren,
   - die Berechnung der Entformungskraft F' des zweiten Materials derart, dass gilt F' = C' x $F_0$.

5. Bewertungsverfahren nach einem der vorhergehenden Ansprüche, **dadurch gekennzeichnet, dass** das Formmuster (2) in einem Bereich der Form gewählt wird, wo die Entformungskraft am stärksten ist.

6. Vorrichtung (1) zur Auswahl eines Material/Form-Paars, **dadurch gekennzeichnet, dass** sie ein Formmuster (2), einen Kontrollprüfling (3), eine Kraftmessvorrichtung (4) und eine Recheneinrichtung (5) enthält, und dass sie das Verfahren nach einem der vorhergehenden Ansprüche verwendet.

7. Computerprogramm zur Auswahl eines Material/Form-Paars, **dadurch gekennzeichnet, dass** es die folgenden Anweisungen enthält:

   - einen Schritt der Wahl eines Formmusters (2),
   - einen Schritt der Wahl eines Bezugsmaterials (6),
   - einen Schritt der Bemessung der Entformungskraft $F_0$ des Formmusters (2) durch das Bezugsmaterial (6),
   - einen Schritt der Bestimmung der Entformungskraft $M_0$ des Bezugsmaterials (6) des Kontrollprüflings (3),
   - einen Schritt der Auswahl eines zu messenden Materials (7),
   - einen Schritt der Bestimmung der Entformungskraft M des Materials (7) des Kontrollprüflings (3),
   - einen Schritt der Berechnung des Verhältnisses der Entformungskräfte $M_0$ des Bezugsmaterials (6) und M des Materials (7) des Kontrollprüflings (2), um einen Koeffizienten C des Materialeinflusses zu definieren,
   - einen Schritt der Berechnung der Entformungskraft F des Materials (7) derart, dass gilt F = C x $F_0$.

8. Verwendung des Verfahrens nach einem der Ansprüche 1 bis 5 zur Auswahl eines Material/Form-Paars, das die Bedingung erfüllt, dass die Entformungskraft F des Materials niedriger ist als eine vorbestimmte Entformungskraft.

**Claims**

1. Method for evaluating a force for demoulding a tyre from a mould, consisting in measuring the force for demoulding a material (6) from a mould specimen (2) and a control test specimen (3), said method including:

   - a step (E1) of choosing a mould specimen (2),
   - a step (E2) of choosing a reference material (6),
   - a step (E3) of measuring the force $F_0$ for demoulding the reference material (6) from the mould specimen (2),
   - a step (E4) of determining the force $M_0$ for demoulding the reference material (6) from the control test specimen (3),
   - a step (P1) of selecting a material (7) to be measured,
   - a step (P2) of determining the force M for demoulding the material (7) from the control test specimen (3),
   - a step (P3) of calculating the ratio of the forces $M_0$ for demoulding the reference material (6) and M for demoulding the material (7) from the control test specimen (3) so as to define a coefficient C of material impact,
   - a step (P4) of calculating the force F for demoulding the material (7) such that F = C x $F_0$.

2. Evaluation method according to Claim 1, **characterized in that** it comprises a step (E3) of measuring a second mould specimen such that the force $M_1$ for demoulding from this second specimen is greater than the force $M_0$.

3. Evaluation method according to the preceding claim, **characterized in that** the force $M_0$ for demoulding constitutes a lower limit and the force $M_1$ constitutes an upper limit.

4. Evaluation method according to one of the preceding claims, **characterized in that** the evaluation of the force M' for demoulding a second material is limited to the following steps of:

- determining the force M' for demoulding the second material from the control test specimen (3),
- calculating the ratio of the forces $M_0$ for demoulding the second reference material and M' for demoulding the second material from the control test specimen (3) so as to define a coefficient C' of material impact,
- calculating the force F' for demoulding the second material such that F' = C' x $F_0$.

5. Evaluation method according to one of the preceding claims, **characterized in that** the mould specimen (2) is chosen from a region of the mould where the demoulding force is greatest.

6. Device (1) for selecting a material/mould pair, **characterized in that** it comprises a mould specimen (2), a control test specimen (3), a force measuring device (4) and a calculating means (5) and **in that** it uses the method according to one of the preceding claims.

7. Computer program for selecting a material/mould pair, **characterized in that** it comprises the following instructions:

- a step of choosing a mould specimen (2),
- a step of choosing a reference material (6),
- a step of measuring the force $F_0$ for demoulding the reference material (6) from the mould specimen (2),
- a step of determining the force $M_0$ for demoulding the reference material (6) from the control test specimen (3),
- a step of selecting a material (7) to be measured,
- a step of determining the force M for demoulding the material (7) from the control test specimen (3),
- a step of calculating the ratio of the forces $M_0$ for demoulding the reference material (6) and M for demoulding the material (7) from the control test specimen (2) so as to define a coefficient C of material impact,
- a step of calculating the force F for demoulding the material (7) such that F = C x $F_0$.

8. Use of the method according to any one of Claims 1 to 5 for selecting a material/mould pair that meets the condition that the force F for demoulding the material is less than a predetermined demoulding force.

FIGURE 1

FIGURE 2

**EP 3 122 548 B1**

**RÉFÉRENCES CITÉES DANS LA DESCRIPTION**

**Documents brevets cités dans la description**

- JP 2012096462 A
- JP 2012006287 B